# FASCICULE DE BREVET EUROPEEN

(11) **EP 4 374 048 B1**
(45) Date de publication et mention de la délivrance du brevet: **03.09.2025**
(21) Numéro de dépôt: 22753727.1
(22) Date de dépôt: 20.07.2022
(51) Int. Cl.: F01D 25/12, F01D 25/16, F02C 7/06

(54) **MANCHON RAPPORTÉ SUR UN ARBRE BASSE PRESSION DANS UNE TURBOMACHINE**
AUF EINER NIEDERDRUCKWELLE IN EINER TURBOMASCHINE MONTIERTE HÜLSE
SLEEVE MOUNTED ONTO A LOW-PRESSURE SHAFT IN A TURBOMACHINE

(30) Priorité: 22.07.2021 FR 2107949
(43) Date de publication de la demande: 29.05.2024
(73) Titulaire: SAFRAN AIRCRAFT ENGINES, 75015 Paris (FR)
(72) Inventeur: SIMON, Vianney, 77550 MOISSY-CRAMAYEL (FR); ROSSET, Patrice Jean-Marc, 77550 MOISSY-CRAMAYEL (FR); SULTANA, Patrick Jean Laurent, 77550 MOISSY-CRAMAYEL (FR); TAILLANT, Jean-Claude Christian, 77550 MOISSY-CRAMAYEL (FR)
(74) Mandataire: Regimbeau
(86) Numéro de dépôt international: PCT/FR2022/051438
(87) Numéro de publication internationale: WO 2023/002121

(56) Documents cités:
- EP-A1- 3 018 302
- EP-A2- 2 050 932
- US-A- 3 158 413
- US-A1- 2019 093 508

## Description

### DOMAINE DE L'INVENTION

La présente invention concerne le domaine des systèmes propulsifs aéronautiques et trouve notamment une application dans les systèmes propulsifs présentant un fort taux de dilution.

### ETAT DE LA TECHNIQUE

De manière connue en soi, une turbomachine comprend des paliers configurés pour supporter une partie mobile par rapport à une partie fixe (ou stator) de la turbomachine ou par rapport à une autre partie mobile. Ces paliers peuvent notamment comprendre une bague interne montée sur un élément mobile, par exemple un arbre, et une bague externe montée sur une autre partie de la turbomachine. La bague interne peut en particulier être montée sur l'arbre basse pression à l'aide d'écrous filetés. L'arbre comprend alors des filets complémentaires permettant la fixation de l'écrou et son serrage contre la bague interne. Des éléments d'étanchéité tels que des léchettes peuvent également être prévus sur l'arbre. Ces éléments d'étanchéité peuvent en particulier être monolithiques avec l'arbre basse pression.

Le montage et l'usinage de ces différents composants nécessite toutefois des usinages spécifiques tels que la réalisation de filets ou d'éléments d'étanchéité qui, en plus de soulever des difficultés techniques en termes d'usinage, forment des zones privilégiées d'endommagement de l'arbre, créant des zones de faiblesse et/ou des zones de concentration de contraintes. Selon les matériaux choisis pour l'arbre et les éléments d'étanchéité type léchettes, il peut en outre y avoir des risques de corrosion accrus, notamment en sommet de léchettes en raison des frottements, cette zone ne pouvant être protégée.

Les opérations de maintenance sont en outre complexes, en particulier lorsque les zones usées ou endommagées touchent l'arbre.

Ces risques sont d'autant plus importants dans le cas des arbres basse pression supercritiques et rapides, par exemple dans les turbomachines dont la soufflante est non carénée.

Le document US3158413 décrit une enceinte de palier comprenant un roulement ayant une bague extérieure qui est espacée du roulement par un jeu, et des moyens pour fournir au jeu un film d'huile.

### EXPOSE DE L'INVENTION

Un but de l'invention est de remédier aux inconvénients précités, en proposant un arbre basse pression de turbomachine plus simple à réaliser, présentant une durée de vie accrue et dont la maintenance est facilitée.

Il est à cet effet proposé, selon un premier aspect de l'invention un ensemble de turbomachine conforme à la revendication 1. Des modes de réalisation de l'ensemble sont définis dans les revendications dépendantes.

Optionnellement, l'ensemble de turbomachine selon le premier aspect peut en outre comprendre une bride supplémentaire non revendiquée, la bride supplémentaire, la deuxième bride et la première bride étant raccordées par un même organe de fixation, qui peut comprendre un boulon agencé radialement à l'extérieur par rapport au manchon.

Selon un deuxième aspect, l'invention propose une turbomachine comprenant un ensemble selon le premier aspect. La turbomachine comprend une hélice non carénée entrainée en rotation par l'arbre. La turbomachine présente un taux de dilution supérieur à 30.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple d'ensemble tournant conforme à un mode de réalisation de l'invention ;

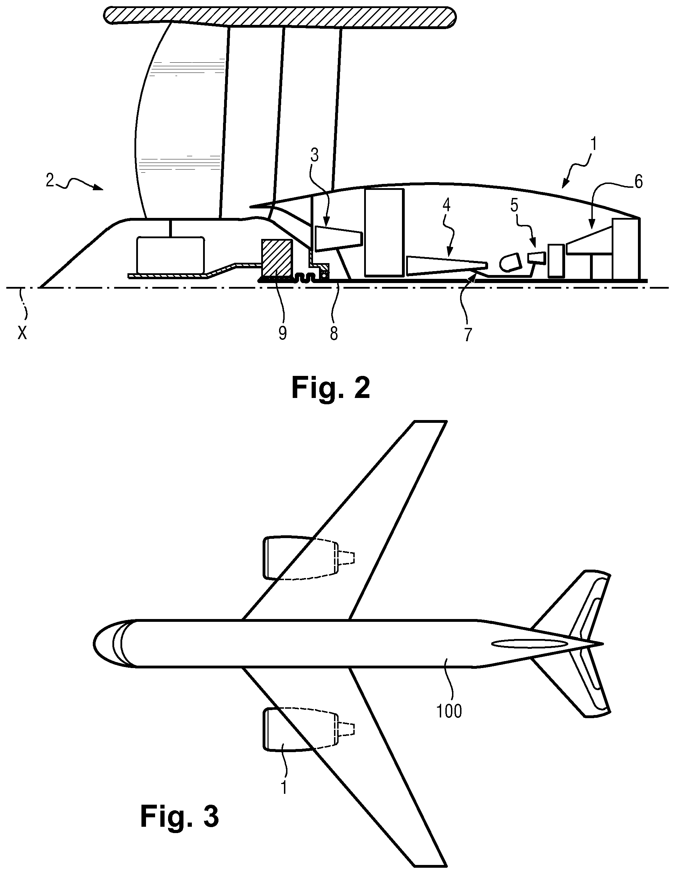

La figure 2 est une vue partielle schématique d'un exemple de turbomachine pouvant comprendre un ensemble tournant conforme à l'invention ;
La figure 3 illustre schématiquement un aéronef comprenant deux turbomachines conformes à un mode de réalisation de l'invention.

Sur l'ensemble des figures, les éléments similaires portent des références identiques.

### DESCRIPTION DETAILLEE DE L'INVENTION

Une turbomachine 1 à double flux, notamment d'un aéronef 100, comprend généralement, d'amont en aval dans le sens de l'écoulement des gaz, une soufflante 2 (ou hélice), un espace annulaire d'écoulement primaire et un espace annulaire d'écoulement secondaire qui est extérieurement par rapport à l'écoulement primaire. La masse d'air aspirée par la soufflante 2 est donc divisée en un flux primaire, qui circule dans une veine d'écoulement primaire, et en un flux secondaire, qui est concentrique avec le flux primaire et circule dans une veine d'écoulement secondaire. La soufflante 2 (ou hélice) peut être carénée et logée dans un carter de soufflante 2 ou en variante non carénée du type USF (acronyme anglais de Unducted Single Fan, pour soufflante 2 unique non carénée). Les aubes de soufflante 2 peuvent être fixes ou présenter un calage variable, le calage étant ajusté en fonction des phases de vol par un mécanisme de changement de pas.

La veine d'écoulement primaire traverse un corps primaire comprenant un ou plusieurs étages de compresseurs, par exemple un compresseur basse pression 3 (ou booster) et un compresseur haute pression 4, une chambre de combustion, un ou plusieurs étages de turbines, par exemple une turbine haute pression 5 et une turbine basse pression 6, et une tuyère d'échappement des gaz. Typiquement, la turbine haute pression 5 entraine en rotation le compresseur haute pression 4 par l'intermédiaire d'un premier arbre 7, dit arbre haute pression, tandis que la turbine basse pression 6 entraine en rotation le compresseur basse pression 3 et la soufflante 2 par l'intermédiaire d'un deuxième arbre 8, dit arbre basse pression. L'arbre basse pression 8 est généralement logé sur un certain tronçon dans l'arbre haute pression 7.

Plusieurs composants 11, 15, 29 de la turbomachine 1 peuvent être montés de manière amovible sur l'arbre basse pression 8 afin d'être entrainés en rotation autour de l'axe de révolution de l'arbre basse pression 8. Ces composants 11, 15, 29 comprennent notamment un ou plusieurs paliers 11, des éléments d'étanchéité 15, 16, 30 et/ou une ou plusieurs écopes 29.

Comme cela a été décrit plus haut, un palier 11 est configuré pour supporter une partie mobile par rapport à une partie fixe (ou stator) de la turbomachine 1 ou par rapport à une autre partie mobile. Le palier 11 comprend notamment une bague interne 12 solidaire en mouvement de l'arbre basse pression 8, une bague externe 13 montée sur une autre partie de la turbomachine 1, la bague interne 12 et la bague externe 13 logeant par exemple un roulement 14. La bague interne 12 et la bague externe 13 sont mobiles l'une par rapport à l'autre.

L'élément d'étanchéité 15 est configuré pour réaliser une étanchéité entre deux pièces et peut comprendre par exemple un joint à labyrinthe qui présente au moins deux restrictions de jeu axialement adjacentes. Les restrictions de jeu peuvent par exemple comprendre au moins deux léchettes et/ou une vrille qui s'enroule sur au moins deux tours. Le joint à labyrinthe peut ainsi comprendre un support solidaire en mouvement de l'arbre basse pression 8 et les restrictions de jeu configurées pour coopérer avec une pièce d'étanchéité complémentaire monté sur une pièce en regard, par exemple un élément abradable. On notera que l'élément d'étanchéité 15 peut comprendre tout autre type de joint, tel qu'un joint radial segmenté, un joint à brosse, un joint carbone, etc.

L'écope 29 peut faire partir d'un système de lubrification de l'ensemble tournant 1 et être configurée pour alimenter des pièces en fluide de lubrification.

Afin de faciliter la fabrication et la maintenance de l'arbre basse pression 8 et d'en améliorer la durée de vie, tout ou partie des composants 11, 15, 16, 29 entrainés en rotation par l'arbre basse pression 8 sont raccordés à l'arbre par l'intermédiaire d'un manchon 19 emmanché sur l'arbre basse pression 8. A cet effet, l'arbre basse pression 8 comprend une première bride 18 s'étendant radialement d'une surface radiale externe de l'arbre. Par ailleurs, le manchon 19 comprend une deuxième bride 20 s'étendant radialement du manchon 19 et configurée pour coopérer avec la première bride 18 afin de permettre la fixation du manchon 19 sur l'arbre basse pression 8. Le manchon 19 est alors solidaire en mouvement (en rotation et en translation) de l'arbre basse pression. Les composants 11, 15, 17, 29 sont alors montés sur ou formés dans le manchon 19 et entrainés par l'arbre basse pression 8 par l'intermédiaire du manchon 19. En particulier, les composants 11, 15 et 29 ne sont pas montés directement sur l'arbre basse pression 8 et ne sont de préférence pas en contact direct avec l'arbre basse pression 8.

La première bride 18 est monolithique avec l'arbre basse pression 8 afin de limiter les besoins d'usinage de l'arbre. La deuxième bride 20 peut être monolithique avec le manchon 19 ou rapportée et fixée sur le manchon 19. Le manchon 19 et l'arbre basse pression 8 forment un ensemble tournant 10. La première bride 18 et la deuxième bride 20 s'étendent ici radialement vers l'extérieur par rapport à l'arbre de rotation X de l'arbre basse pression 8.

La fixation amovible des composants 11, 15, 29 sur le manchon 19, plutôt que sur l'arbre basse pression 8, permet de limiter l'usinage de l'arbre basse pression 8 ce qui améliore sa durée de vie. Il est en outre plus simple et moins coûteux de remplacer ou réparer des composants 11, 15, 29 usés ou endommagés, puisqu'il suffit de démonter les composants 11, 15 et/ou le manchon 19 afin de les remplacer. La fixation du manchon 19 par l'intermédiaire d'une bride plutôt que tout autre moyen de connexion évite par ailleurs la réalisation de filets, susceptibles de s'endommager lors du fonctionnement de la turbomachine 1, et peut être réalisée avec une plus grande tolérance de fabrication et d'alignement.

L'ensemble tournant 10 comprend en outre une enceinte de lubrification 25 comprenant une paroi 25a montée fixe sur un stator de la turbomachine, par exemple un carter de la turbomachine. Le palier 11 est logé dans l'enceinte de lubrification 25. La bague interne 12 est rapportée et fixée sur le manchon 19 et solidaire en rotation avec le manchon 19, et une bague externe 13 montée fixée par rapport à la paroi 25a de l'enceinte de lubrification 25.

L'enceinte 25 est délimitée de part et d'autre par des éléments d'étanchéité 15, 16 comprenant des restrictions de jeu. Avantageusement, l'utilisation de restrictions de jeu types léchettes ou vrilles plutôt que des joints cylindriques améliore l'étanchéité de l'enceinte, l'étanchéité étant réalisée sur une longueur axiale plus importante. De plus, l'endommagement éventuelle d'une des restrictions de jeu est compensée par la présence des autres restrictions de jeu de l'élément d'étanchéité 15, 16 s'étendant immédiatement en aval, de sorte que l'étanchéité de l'enceinte 25 est plus robuste. Or, dans le cas des turbomachines 1 à fort taux de dilution, la vitesse de rotation de l'arbre basse pression 8 est très élevée (la turbine basse pression étant une turbine rapide), de sorte qu'il est nécessaire de garantir l'étanchéité de l'enceinte 25 logeant les paliers 11 montés sur l'arbre basse pression 8).

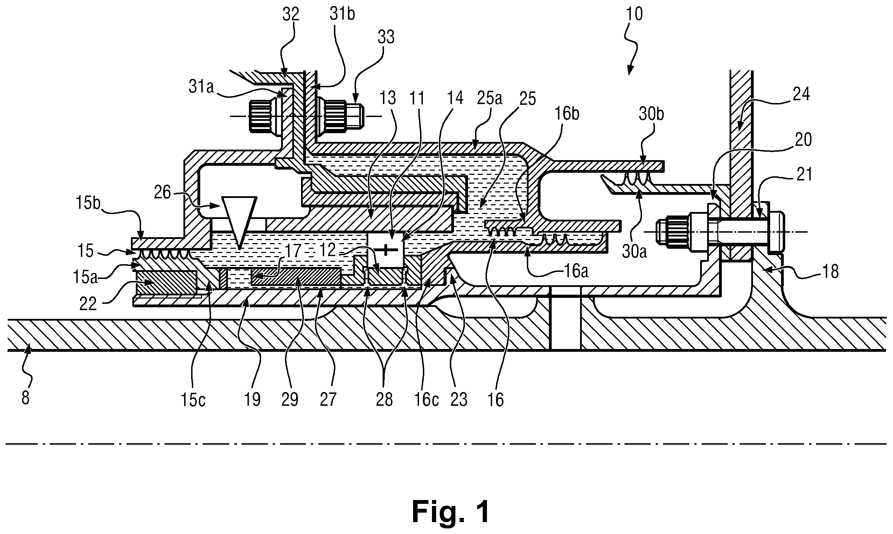

Un premier 15 des éléments d'étanchéité comprend une première partie 15a rapportée et fixée sur le manchon 19 en étant solidaire en mouvement du manchon 19 et une deuxième partie 15b montée fixe par rapport à la paroi 25a de l'enceinte 25. Un deuxième 16 des éléments d'étanchéité comprend une première partie 16a montée fixe sur le manchon 19 en étant solidaire en mouvement du manchon 19 et une deuxième partie 16b montée fixe par rapport à la paroi 25a de l'enceinte 25. Dans l'exemple de réalisation de la figure 1, la première partie 16a est rapportée et fixée sur le manchon 19. En variante, la première partie 16 peut être monolithique avec le manchon 19.

Le palier 11 est placé entre le premier et le deuxième élément d'étanchéité 15, 16.

Le manchon 19 comprend en outre un épaulement s'étendant 23 s'étendant à distance de la deuxième bride 20, le premier élément d'étanchéité 15 et la bague interne 12 étant montés serrés sur le manchon entre un écrou 22 et l'épaulement 23. Cette configuration permet de rendre l'élément d'étanchéité 15 et la bague interne 12 amovibles par rapport au manchon 19 tout en garantissant leur positionnement axial sur le manchon 19. Le montage de ces composants 15, 12 est en outre facile puisqu'il suffit de les emmancher sur le manchon 19 en les mettant en butée contre l'épaulement 23 et de les bloquer en position grâce à l'écrou. Le manchon 19 est en outre aisé à réaliser, par exemple en usinant un filet au niveau d'une extrémité libre du manchon 19, le filet étant configuré pour coopérer avec des filets de forme et de pas complémentaire de l'écrou 22 permettant ainsi le serrage des composants 12, 15 contre l'épaulement 23 par simple vissage de l'écrou 22

L'épaulement 23 peut être monolithique avec le manchon 19. En variante, l'épaulement 23 peut être formé par une pièce rapportée et fixée sur le manchon 19, par exemple un écrou fileté vissé sur le manchon 19, ou une bride fixée mécaniquement ou soudée. L'épaulement 23 s'étend radialement depuis le manchon 19. Tout ou partie des composants 15, 11, 29 sont placés en butée, directement ou indirectement, contre le manchon 19 et bloqués en position à l'aide de l'écrou 22. L'écrou applique en série les composants 15, 11, 29 contre l'épaulement 23. L'écrou 22 et le manchon 19 peuvent par exemple comprendre des filets complémentaires.

Lorsque la première partie 16a du deuxième élément d'étanchéité est rapporté sur le manchon 19 (voir figure 1 par exemple), cette première partie 16a est de préférence également montée serrée sur le manchon 19 entre l'écrou 22 et l'épaulement 23. Typiquement, la première partie 16a peut être positionnée axialement entre la bague interne 12 du palier 11 et l'épaulement 23.

En revanche, lorsque la première partie 16a du deuxième élément d'étanchéité 16 est monolithique avec le manchon 19, l'épaulement 23 peut être placé soit entre la bague interne 12 et la première partie 16, soit entre la bague interne 12 et le premier élément d'étanchéité 15. Dans ce cas, la bague interne peut par exemple comprendre une portion axiale 12a qui supporte le roulement du palier 11 et une portion radiale 12b qui s'étend depuis un bord amont ou un bord aval de la portion axiale.

Dans une forme de réalisation, l'épaulement 23 s'étend à distance de la deuxième bride 20 et l'écrou 22 est monté sur l'extrémité libre du manchon 19 s'étendant à l'opposé de la deuxième bride 20 par rapport à l'épaulement 23. Le manchon 19 comprend donc, à partir de son extrémité libre, l'écrou 22, le premier élément d'étanchéité 15, le palier 11, le deuxième élément d'étanchéité 16 et la deuxième bride 20.

La deuxième bride 20 est placée en butée contre la première bride 18 et maintenue dans cette position, par exemple à l'aide d'un boulon 21. A cet effet, la première bride 18 et la deuxième bride 20 comprennent chacune au moins un orifice, et un organe de fixation 21 est inséré dans ces orifices afin de raccorder les brides 18, 20. Les orifices peuvent être traversants et lisses, auquel cas l'organe de fixation 21 peut comprendre une tige filetée et un écrou. En variante, au moins l'un des orifices peut être fileté, auquel cas l'organe de fixation 21 peut comprendre une vis et optionnellement un écrou. D'autres organes de fixation peuvent bien entendu être envisagés pour raccorder la première bride 18 et la deuxième bride 20.

L'organe de fixation 21 s'étend radialement à l'extérieur par rapport au manchon 19. Le manchon 19 est donc plus proche de l'axe X que l'organe de fixation 21 ce qui contribue à l'étanchéité de l'enceinte de lubrification.

Les composants 15, 16, 11, 29 montés sur ou formés dans le manchon 19 peuvent comprendre au moins la bague interne 12 du palier 11, les premier et deuxième éléments d'étanchéité 15, 16 et optionnellement au moins une écope 29. Dans l'exemple de réalisation illustré, le palier 11 est placé entre les deux éléments d'étanchéité 15, 16, qui délimitent axialement l'enceinte de lubrification 25. Une écope 29 est en outre interposée entre le premier élément d'étanchéité 15 et le palier 11. Le premier élément d'étanchéité 15, l'écope 19, le palier 11 et le cas échéant le deuxième élément d'étanchéité 16sont montés serrés en série entre l'écrou 22 et l'épaulement 23 du manchon 19. Ni l'écrou 22, ni les composants 11, 15, 16, 29 ne sont donc fixés, ni même en contact direct, avec l'arbre basse pression 8.

Ici, le premier élément d'étanchéité 15 comprend un support tubulaire 15c monté sur le manchon 19 et une virole 15a s'étendant vers l'amont depuis le support tubulaire 15c et portant des restrictions de jeu. La virole 15a s'étend radialement autour de l'écrou 22. Le deuxième élément d'étanchéité 16 plus en aval comprend également un support 16c, qui est soit raccordé au manchon 19 entre l'épaulement 23 et la bague interne 12 du palier 11 (figure 1), soit monolithique avec le manchon 19, et une virole 16a s'étendant au-radialement autour du manchon 19 entre le support 16c et la deuxième bride 20 et qui porte les restrictions de jeu.

Dans une forme de réalisation, les restrictions de jeu du deuxième élément d'étanchéité 16 comprennent un premier groupe de restrictions de jeu montées sur la virole 16a et un deuxième groupe de restrictions de jeu montées sur la partie 16b fixée sur la paroi 25a de l'enceinte. Les deux groupes de restrictions de jeu sont espacés axialement de sorte que les restrictions de jeu du premier groupe font face à un abradable fixé sur la partie 16b tandis que les restrictions de jeu du deuxième groupe font face à un abradable fixé sur la virole 16a. Cette configuration permet d'améliorer l'étanchéité de l'enceinte 25, la longueur axiale de l'élément d'étanchéité 16 étant plus importante de par la présence des groupes de restrictions de jeu et de l'espace les séparant.

Dans une forme de réalisation, une somme d'une longueur axiale du premier élément d'étanchéité 15 et du deuxième élément d'étanchéité 16 est au plus égale au double d'une distance axiale entre l'écrou 22 et l'épaulement 23, de préférence sensiblement égale à 10 % près.

Afin d'améliorer encore l'étanchéité de l'ensemble tournant 10, l'ensemble 10 comprend en outre un troisième élément d'étanchéité 30 comprenant des restrictions de jeu (léchettes ou vrilles), le troisième élément d'étanchéité 30 comprenant une première partie 30a rapportée et fixée la première bride 18 en étant solidaire en mouvement de l'arbre basse pression 8 et une deuxième partie 30b montée fixe par rapport à la paroi 25a de l'enceinte 25. Le cas échéant, la première partie 30a du troisième élément d'étanchéité 30 peut être fixée sur la première bride 18 à l'aide de l'organe de fixation 21, par exemple entre la première et la deuxième bride 18, 20 lorsque l'organe de fixation 21 comprend un boulon. De préférence, le boulon 21 est radialement à l'extérieur par rapport au manchon 19.

Toujours pour améliorer l'étanchéité de l'ensemble tournant 10, le troisième élément d'étanchéité 30 est en dehors de l'enceinte 25, contrairement aux premier et deuxième éléments d'étanchéité 15, 16 qui délimitent axialement l'enceinte 25 et permettent la rotation relative de la paroi 25a par rapport à l'arbre basse pression 8. Pour cela, la deuxième partie 30b du troisième élément d'étanchéité 30 peut être formée par une paroi cylindrique s'étendant axialement depuis la paroi 25a de l'enceinte 25 en direction de la deuxième bride 20, tandis que la première partie 30a est coudée et comprend une portion radiale montée sur la première bride 18 et une portion axiale s'étendant en direction de l'enceinte 25 de sorte à se trouver face à la paroi cylindrique 30b.

Le troisième élément d'étanchéité 30 s'étend par ailleurs radialement à l'extérieur par rapport au deuxième élément d'étanchéité 16.

Le cas échéant, la première bride 18 de l'arbre basse pression 8 peut être raccordée à une pièce supplémentaire 24 de la turbomachine 1, par exemple à une bride d'un rotor (comme illustré en figure 1). Le cas échéant, la bride 24 s'étend radialement à l'extérieur par rapport à l'organe de fixation 21.

La turbomachine 1 peut également comprendre un système de lubrification configuré pour alimenter des pièces en fluide de lubrification, par exemple le palier 11. A titre d'exemple, le système de lubrification comprend un gicleur 26 débouchant dans l'enceinte 25 et configuré pour fournir une quantité de fluide (typiquement de l'huile) au palier 11. Dans l'exemple illustré sur les figures, l'enceinte 25 comprend le palier 11 et est délimitée en amont et en aval par les éléments d'étanchéité 15 montés sur le manchon 19. Le gicleur 26 peut notamment être positionné entre le palier 11 et l'élément d'étanchéité le plus en amont. L'écope 29 est alors montée sur le manchon 19 de sorte à s'étendre entre le gicleur 26 et l'arbre basse pression 8. Elle est configurée pour acheminer le fluide fourni par le gicleur 26 jusqu'au roulement 14 du palier 11. A cet effet, l'écope 29 peut notamment comprendre un fourreau emmanché sur le manchon 19 dans lequel sont formés un orifice 17 et un canal d'alimentation 27 reliant l'orifice 17 à la bague interne 12. Lorsque l'écope 29 est fixée sur le manchon 19, l'orifice 17 se trouve à proximité du gicleur 26, par exemple face au gicleur 26. Le canal d'alimentation 27 est de préférence formé dans l'écope 29 et s'étend axialement de l'orifice 17 jusqu'à un ou plusieurs conduits 28 formés dans la bague interne 12 et débouchant sur le roulement 14. Sous l'effet des efforts centrifuges, le fluide est alors projeté par les conduits 28 sur le roulement 14 et se diffuse dans l'enceinte 25.

Dans une forme de réalisation, la paroi 25a de l'enceinte de lubrification 25 comprend deux parties comprenant chacune une bride de fixation 31a, 31b. Les brides de fixation 31a, 31b de la paroi 25a sont toutes les deux fixées à une même bride 32 du stator de la turbomachine par l'intermédiaire d'un boulon 33. Par exemple, les brides de fixations 31a, 31b peuvent être montées de part et d'autre de la bride 32 du stator, les trois brides 31a, 32, 31b étant fixées ensemble par le boulon 33. De préférence, chaque bride de fixation 31a, 31b est monolithique avec la partie de la paroi 25a correspondante.

La présente invention trouve une application particulière dans le cas d'une turbomachine 1 du type USF, dont l'hélice (ou soufflante 2) est non carénée et est entrainée par l'arbre basse pression 8 par l'intermédiaire d'un réducteur 9. L'hélice présente alors un fort taux de dilution, typiquement un taux de dilution supérieur à 30, par exemple entre 40 et 80. Par taux de dilution (bypass ratio en anglais), on comprendra ici le rapport entre le débit du flux secondaire et le débit du flux primaire. L'arbre basse pression 8 d'une telle turbomachine 1 est alors supercritique (c'est-à-dire qu'il présente un mode de déformation en flexion dans la plage de fonctionnement) et rapide. Il est donc soumis à un environnement vibratoire sévère. De plus, les matériaux habituellement utilisés pour ces arbres basse pression 8 peuvent être sensibles à la corrosion et à l'usure.

La fixation notamment des éléments d'étanchéité 15 sur le manchon 19 plutôt que sur l'arbre basse pression 8, permet ainsi de réaliser les éléments d'étanchéité 15 dans des matériaux distincts de celui de l'arbre basse pression 8, et de réduire ainsi les risques de corrosion, notamment en tête de restrictions de jeu. La maintenance est en outre grandement simplifiée puisqu'il suffit de démonter l'élément d'étanchéité 15 du manchon 19 ou, éventuellement, le manchon 19 de l'arbre basse pression 8.

## Revendications

1. Ensemble d'une turbomachine comprenant :
- un arbre (8) configuré pour entrainer une hélice (2) de la turbomachine (1) autour d'un axe (X) et comprenant une première bride (18) s'étendant radialement depuis l'arbre (8), la première bride (18) étant monolithique avec l'arbre (8) ;
- un manchon (19) emmanché sur l'arbre (8) et comprenant une deuxième bride (20) s'étendant radialement depuis le manchon (19), le manchon (19) étant fixé sur la première bride (18) de l'arbre (8) par l'intermédiaire de la deuxième bride (20) ;
- une enceinte de lubrification (25) comprenant une paroi montée fixe sur un stator de la turbomachine ;
- un palier (11) logé dans l'enceinte de lubrification (25), le palier comprenant une bague interne (12) montée sur le manchon (19) en étant solidaire en rotation avec le manchon, et une bague externe (13) montée fixe par rapport à la paroi (25a) de l'enceinte de lubrification ;
- un premier élément d'étanchéité (15) comprenant un joint à labyrinthe qui présente au moins deux restrictions de jeu axialement adjacentes, le premier élément d'étanchéité (15) comprenant une première partie (15a) rapportée et fixée sur le manchon (19) en étant solidaire en mouvement du manchon (19) et une deuxième partie (15b) montée fixe par rapport à la paroi (25a) de l'enceinte de lubrification (25) ;
- un deuxième élément d'étanchéité (16) comprenant un joint à labyrinthe qui présente au moins deux restrictions de jeu axialement adjacentes, le deuxième élément d'étanchéité (16) comprenant une première partie (16a) montée fixe sur le manchon en étant solidaire en mouvement du manchon et une deuxième partie (16b) montée fixe par rapport à la paroi (25a) de l'enceinte de lubrification (25), le palier (11) étant placé axialement entre le premier et le deuxième élément d'étanchéité (16) ;
le manchon (19) comprenant en outre un épaulement (23) s'étendant axialement à distance de la deuxième bride (20), le premier élément d'étanchéité (15) et la bague interne (12) étant montés serrés axialement sur le manchon entre un écrou (22) et l'épaulement (23).

2. Ensemble (10) selon la revendication 1, dans lequel le manchon (19) est réalisé dans un matériau distinct de celui de l'arbre (8).

3. Ensemble selon l'une des revendications 1 et 2, comprenant en outre un troisième élément d'étanchéité (30) comprenant des restrictions de jeu axialement adjacentes, le troisième élément d'étanchéité (30) comprenant une première partie (30a) rapportée et fixée sur la première bride (18) en étant solidaire en mouvement de l'arbre (8) et une deuxième partie (30b) montée fixe par rapport à la paroi (25) de l'enceinte de lubrification (25).

4. Ensemble (10) selon la revendication 3, dans lequel le troisième élément d'étanchéité (30) est disposé radialement à l'extérieur par rapport au deuxième élément d'étanchéité (16) et/ou placé en dehors de l'enceinte de lubrification (25).

5. Ensemble (10) selon l'une des revendications 1 à 4, dans lequel au moins un élément d'étanchéité (15, 16, 30) et la bague interne (12) sont montés de manière amovible sur le manchon (19).

6. Ensemble (10) selon l'une des revendications 1 à 5, dans lequel la première partie (16a) du deuxième élément d'étanchéité (16) est monolithique avec le manchon (19).

7. Ensemble (10) selon l'une des revendications 1 à 6, dans lequel l'écrou (22) est monté sur une extrémité libre axiale du manchon (19), par exemple par vissage.

8. Ensemble (10) selon l'une des revendications 1 à 7, dans lequel la paroi (25a) de l'enceinte de lubrification (25) comprend une troisième bride (31a, 31b) et le stator de la turbomachine comprend une quatrième bride (32), la troisième bride (31a, 31b) étant fixée sur la quatrième bride (32) par l'intermédiaire d'un boulon supplémentaire (33), la paroi (25a) comprenant en outre deux portions de paroi, une première des portions de paroi étant monolithique avec la troisième bride (31a) et une deuxième des portions de paroi étant monolithique avec une cinquième bride (31b), la cinquième bride (31b) étant également fixée sur la quatrième bride (32) par l'intermédiaire du boulon supplémentaire (33).

9. Ensemble (10) selon la revendication 8, dans lequel l'organe de fixation (21) est un boulon (21), qui est agencé radialement à l'extérieur par rapport au manchon (19) et le boulon supplémentaire (33) est agencé radialement à l'extérieur de l'organe de fixation (21).

10. Ensemble (10) selon l'une des revendications 1 à 9, dans lequel les restrictions de jeu du joint à labyrinthe du deuxième élément d'étanchéité (16) comprennent un premier groupe de restrictions de jeu monté sur la première partie (16a) et un deuxième groupe de restrictions de jeu monté sur la deuxième partie (16b), le premier groupe de restrictions de jeu étant espacé axialement du deuxième groupe de restrictions de jeu.

11. Ensemble (10) selon l'une des revendications 1 à 10, dans lequel le premier élément d'étanchéité (15) comprend un premier support (15c) fixé sur le manchon (19) et une première virole (15a) s'étendant radialement autour de l'écrou (22), l'un parmi le premier support (15c) et la première virole (15a) portant les restrictions de jeu du joint à labyrinthe.

12. Ensemble (10) selon l'une des revendications 1 à 11, dans lequel le deuxième élément d'étanchéité (16) comprend un deuxième support (16c) monté fixe sur le manchon (19) et une deuxième virole (16a), la deuxième virole (16a) s'étendant axialement entre le palier (11) et la deuxième bride (20).

13. Ensemble (10) selon l'une des revendications 1 à 12, comprenant en outre :
- un gicleur (26) débouchant dans l'enceinte (25), le gicleur étant raccordé à un système de lubrification et étant configuré pour fournir une quantité de fluide au palier (11) ; et
- une écope (17, 27, 28) raccordée au système de lubrification et configurée pour acheminer le fluide au palier (11), l'écope (29) présentant une entrée agencée face au gicleur (26) et une sortie qui débouche sur la bague interne (12) du palier (11).

14. Ensemble (10) selon la revendication 13, dans lequel l'écope (29) comprend un fourreau emmanché sur le manchon (19) dans lequel sont formés un orifice (17) et un canal d'alimentation (27) raccordant fluidiquement l'entrée (17) et la bague interne (12) du palier (11).

15. Turbomachine (1) comprenant un ensemble (10) selon l'une des revendications 1 à 14 et une hélice (2) non carénée entrainée en rotation par l'arbre (8), la turbomachine (1) présentant un taux de dilution supérieur à 30.

## Patentansprüche

1. Anordnung einer Turbomaschine, umfassend:
- eine Welle (8), die ausgelegt ist, um eine Luftschraube (2) der Turbomaschine (1) um eine Achse (X) anzutreiben und einen ersten Flansch (18) umfasst, der sich radial ab der Welle (8) erstreckt, wobei der erste Flansch (18) mit der Welle (8) monolithisch ist;
- eine auf die Welle (8) aufgeschobene Hülse (19) mit einem zweiten Flansch (20), der sich radial ab der Hülse (19) erstreckt, wobei die Hülse (19) über den zweiten Flansch (20) auf dem ersten Flansch (18) der Welle (8) befestigt ist;
- ein Schmiergehäuse (25) mit einer Wand, die fest auf einem Stator der Turbomaschine angebracht ist;
- ein im Schmiergehäuse (25) untergebrachtes Lager (11), wobei das Lager einen Innenring (12), der an der Hülse (19) angebracht und drehfest mit der Hülse verbunden ist, und einen Außenring (13) umfasst, der in Bezug auf die Wand (25a) des Schmiergehäuses fest angebracht ist;
- ein erstes Dichtungselement (15), das eine Labyrinthdichtung umfasst, die mindestens zwei axial benachbarte Spieleinschränkungen aufweist, wobei das erste Dichtungselement (15) einen ersten Teil (15a) umfasst, der an der Hülse (19) angebracht und befestigt ist, wobei er bewegungsfest mit der Hülse (19) verbunden ist, und einen zweiten Teil (15b), der in Bezug auf die Wand (25a) des Schmiergehäuses (25) fest angebracht ist;
- ein zweites Dichtungselement (16), das eine Labyrinthdichtung umfasst, die mindestens zwei axial benachbarte Spieleinschränkungen aufweist, wobei das zweite Dichtungselement (16) einen ersten Teil (16a) umfasst, der an der Hülse fest angebracht ist, wobei er bewegungsfest mit der Hülse verbunden ist, und einen zweiten Teil (16b), der in Bezug auf die Wand (25a) des Schmiergehäuses (25) fest angebracht ist, wobei das Lager (11) axial zwischen dem ersten und dem zweiten Dichtungselement (16) angeordnet ist;
wobei die Hülse (19) ferner einen Absatz (23) umfasst, der sich axial in einem Abstand vom zweiten Flansch (20) erstreckt, wobei das erste Dichtungselement (15) und der Innenring (12) axial auf der Hülse zwischen einer Mutter (22) und dem Absatz (23) gespannt angebracht sind.

2. Anordnung (10) nach Anspruch 1, wobei die Hülse (19) aus einem anderen Material als die Welle (8) hergestellt ist.

3. Anordnung (10) nach einem der Ansprüche 1 und 2, die ferner ein drittes Dichtungselement (30) mit axial benachbarten Spieleinschränkungen umfasst, wobei das dritte Dichtungselement (30) einen ersten Teil (30a) umfasst, der am ersten Flansch (18) angebracht und befestigt ist, wobei er bewegungsfest mit der Welle (8) verbunden ist, und einen zweiten Teil (30b), der in Bezug auf die Wand (25) des Schmiergehäuses (25) fest angebracht ist.

4. Anordnung (10) nach Anspruch 3, wobei das dritte Dichtungselement (30) radial außen in Bezug auf das zweite Dichtungselement (16) angeordnet und/oder außerhalb des Schmiergehäuses (25) platziert ist.

5. Anordnung (10) nach einem der Ansprüche 1 bis 4, wobei mindestens ein Dichtungselement (15, 16, 30) und der Innenring (12) lösbar an der Hülse (19) angebracht sind.

6. Anordnung (10) nach einem der Ansprüche 1 bis 5, wobei der erste Teil (16a) des zweiten Dichtungselements (16) mit der Hülse (19) monolithisch ist.

7. Anordnung (10) nach einem der Ansprüche 1 bis 6, wobei die Mutter (22) an einem axialen freien Ende der Hülse (19) angebracht ist, beispielsweise durch Verschrauben.

8. Anordnung (10) nach einem der Ansprüche 1 bis 7, wobei die Wand (25a) des Schmiergehäuses (25) einen dritten Flansch (31a, 31b) umfasst und der Stator der Turbomaschine einen vierten Flansch (32) umfasst, wobei der dritte Flansch (31a, 31b) über einen zusätzlichen Bolzen (33) am vierten Flansch (32) befestigt ist, wobei die Wand (25a) ferner zwei Wandabschnitte umfasst, wobei ein erster der Wandabschnitte mit dem dritten Flansch (31a) monolithisch ist und ein zweiter der Wandabschnitte mit einem fünften Flansch (31b) monolithisch ist, wobei der fünfte Flansch (31b) ebenfalls über den zusätzlichen Bolzen (33) am vierten Flansch (32) befestigt ist.

9. Anordnung (10) nach Anspruch 8, wobei das Befestigungselement (21) ein Bolzen (21) ist, der radial außen in Bezug auf die Hülse (19) angebracht ist und der zusätzliche Bolzen (33) radial außerhalb des Befestigungselements (21) eingerichtet ist.

10. Anordnung (10) nach einem der Ansprüche 1 bis 9, wobei die Spieleinschränkungen der Labyrinthdichtung des zweiten Dichtungselements (16) eine erste Gruppe von Spieleinschränkungen, die am ersten Teil (16a) angebracht ist, und eine zweite Gruppe von Spieleinschränkungen, die am zweiten Teil (16b) angebracht ist, umfassen, wobei die erste Gruppe von Spieleinschränkungen axial von der zweiten Gruppe von Spieleinschränkungen beabstandet ist.

11. Anordnung (10) nach einem der Ansprüche 1 bis 10, wobei das erste Dichtungselement (15) einen ersten Träger (15c), der an der Hülse (19) befestigt ist, und einen ersten Ring (15a) umfasst, der sich radial um die Mutter (22) erstreckt, wobei entweder der erste Träger (15c) oder der erste Ring (15a) die Spieleinschränkungen der Labyrinthdichtung trägt.

12. Anordnung (10) nach einem der Ansprüche 1 bis 11, wobei das zweite Dichtungselement (16) einen zweiten Träger (16c), der fest an der Hülse (19) angebracht ist, und einen zweiten Ring (16a) umfasst, wobei sich der zweite Ring (16a) axial zwischen dem Lager (11) und dem zweiten Flansch (20) erstreckt.

13. Anordnung (10) nach einem der Ansprüche 1 bis 12, die ferner umfasst:
- eine in das Gehäuse (25) ausmündende Düse (26), wobei die Düse an ein Schmiersystem angeschlossen und ausgelegt ist, um dem Lager (11) eine Fluidmenge zuzuführen; und
- eine mit dem Schmiersystem verbundene und für die Zufuhr des Fluids zum Lager (11) ausgelegte Schöpfvorrichtung (17, 27, 28), wobei die Schöpfvorrichtung (29) einen der Düse (26) gegenüberliegend eingerichteten Einlass und einen Auslass aufweist, der auf dem Innenring (12) des Lagers (11) ausmündet.

14. Anordnung (10) nach Anspruch 13, wobei die Schöpfvorrichtung (29) einen auf die Hülse (19) aufgeschobenen Mantel umfasst, in dem eine Öffnung (17) und ein Versorgungskanal (27) ausgebildet sind, der den Einlass (17) und den Innenring (12) des Lagers (11) fluidisch verbindet.

15. Turbomaschine (1), die eine Anordnung (10) nach einem der Ansprüche 1 bis 14 und eine nicht verkleidete Luftschraube (2) umfasst, die von der Welle (8) rotatorisch angetrieben wird, wobei die Turbomaschine (1) eine Nebenstromrate über 30 aufweist.

## Claims

1. Turbomachine assembly comprising:
- a shaft (8) configured to drive a propeller (2) of the turbomachine (1) about an axis (X) and comprising a first flange (18) extending radially from the shaft (8), the first flange (18) being monolithic with the shaft (8);
- a sleeve (19) fitted over the shaft (8) and comprising a second flange (20) extending radially from the sleeve (19), the sleeve (19) being secured to the first flange (18) of the shaft (8) via the second flange (20);
- a lubrication enclosure (25) comprising a wall fixedly mounted on a stator of the turbomachine;
- a bearing (11) housed in the lubrication enclosure (25), the bearing comprising an inner ring (12) mounted on the sleeve (19) so as to be fixed in rotation with the sleeve, and an outer ring (13) mounted so as to be fixed relative to the wall (25a) of the lubrication enclosure;
- a first sealing element (15) comprising a labyrinth seal which has at least two axially adjacent clearance restrictions, the first sealing element (15) comprising a first portion (15a) fitted and fixed to the sleeve (19), being integral in movement with the sleeve (19), and a second portion (15b) fixedly mounted relative to the wall (25a) of the lubrication enclosure (25);
- a second sealing element (16) comprising a labyrinth seal which has at least two axially adjacent clearance restrictions, the second sealing element (16) comprising a first part (16a) fixedly mounted on the sleeve so as to be integral in movement with the sleeve and a second part (16b) fixedly mounted relative to the wall (25a) of the lubrication enclosure (25), the bearing (11) being located axially between the first and second sealing elements (16);
the sleeve (19) further comprising a shoulder (23) extending axially away from the second flange (20), the first sealing element (15) and the inner ring being tightly mounted axially on the sleeve between a nut (22) and the shoulder (23).

2. Assembly (10) according to claim 1, in which the sleeve (19) is made of a material distinct from that of the shaft (8).

3. Assembly according to one of claims 1 and 2, further comprising a third sealing element (30) comprising axially adjacent clearance restrictions, the third sealing element (30) comprising a first part (30a) attached to and fixed on the first flange (18), being integral in movement with the shaft (8), and a second part (30b) fixedly mounted with respect to the wall (25) of the lubrication enclosure (25).

4. Assembly (10) according to claim 3, in which the third sealing element (30) is arranged radially outside the second sealing element (16) and/or outside the lubrication enclosure (25).

5. Assembly (10) according to one of claims 1 to 4, wherein at least one sealing element (15, 16, 30) and the inner ring (12) are removably mounted on the sleeve (19).

6. Assembly (10) according to one of claims 1 to 5, wherein the first part (16a) of the second sealing element (16) is monolithic with the sleeve (19).

7. Assembly (10) according to one of claims 1 to 6, wherein the nut (22) is mounted on an axial free end of the sleeve (19), for example by screwing.

8. Assembly (10) according to one of claims 1 to 7, wherein the wall (25a) of the lubrication enclosure (25) comprises a third flange (31a, 31b) and the stator of the turbomachine comprises a fourth flange (32), the third flange (31a, 31b) being secured to the fourth flange (32) by means of an additional bolt (33), the wall (25a) further comprising two wall portions, a first of the wall portions being monolithic with the third flange (31a) and a second of the wall portions being monolithic with a fifth flange (31b), the fifth flange (31b) also being secured to the fourth flange (32) via the additional bolt (33).

9. An assembly (10) according to claim 8, wherein the fastener (21) is a bolt (21), which is arranged radially outwardly with respect to the sleeve (19) and the additional bolt (33) is arranged radially outwardly of the fastener (21).

10. Assembly (10) according to one of claims 1 to 9, wherein the labyrinth seal clearance restrictions of the second sealing element (16) comprise a first group of clearance restrictions mounted on the first part (16a) and a second group of clearance restrictions mounted on the second part (16b), the first group of clearance restrictions being axially spaced from the second group of clearance restrictions.

11. An assembly (10) according to any of claims 1 to 10, wherein the first sealing element (15) comprises a first support (15c) fixed to the sleeve (19) and a first ferrule (15a) extending radially around the nut (22), one of the first support (15c) and the first ferrule (15a) carrying the clearance restrictions of the labyrinth seal.

12. An assembly (10) according to any of claims 1 to 11, wherein the second sealing element (16) comprises a second support (16c) fixedly mounted on the sleeve (19) and a second ferrule (16a), the second ferrule (16a) extending axially between the bearing (11) and the second flange (20).

13. Assembly (10) according to one of claims 1 to 12, further comprising:
- a nozzle (26) opening into the enclosure (25), the nozzle being connected to a lubrication system and being configured to supply a quantity of fluid to the bearing (11); and
- a scoop (17, 27, 28) connected to the lubrication system and configured to deliver fluid to the bearing (11), the scoop (29) having an inlet facing the nozzle (26) and an outlet which opens onto the inner ring (12) of the bearing (11).

14. Assembly (10) according to claim 13, wherein the scoop (29) comprises a sleeve fitted over the sleeve (19) in which are formed an orifice (17) and a feed channel (27) fluidly connecting the inlet (17) and the inner ring (12) of the bearing (11).

15. Turbomachine (1) comprising an assembly (10) according to one of claims 1 to 14 and an unshrouded propeller (2) driven in rotation by the shaft (8), the turbomachine (1) having a bypass ratio greater than 30.
